(19) Europäisches Patentamt
European Patent Office
Office européen des brevets

(11) Veröffentlichungsnummer : **0 150 822**
**B1**

# (12) EUROPÄISCHE PATENTSCHRIFT

(45) Veröffentlichungstag der Patentschrift : **23.03.88**

(51) Int. Cl.⁴ : **C 07 F 9/09**, C 07 F 9/165, C 07 F 9/24, C 07 F 9/40, A 01 N 57/02

(21) Anmeldenummer : **85100743.5**

(22) Anmeldetag : **25.01.85**

## (54) Oximinophosphorsäurederivate, Verfahren zu ihrer Herstellung und ihre Verwendung zur Bekämpfung von Schädlingen.

(30) Priorität : **31.01.84 DE 3403203**

(43) Veröffentlichungstag der Anmeldung : **07.08.85 Patentblatt 85/32**

(45) Bekanntmachung des Hinweises auf die Patenterteilung : **23.03.88 Patentblatt 88/12**

(84) Benannte Vertragsstaaten : **AT BE CH DE FR GB IT LI NL**

(56) Entgegenhaltungen :
**EP-A- 0 074 047**
**US-A- 3 551 529**

(73) Patentinhaber : **BASF Aktiengesellschaft**
**Carl-Bosch-Strasse 38**
**D-6700 Ludwigshafen (DE)**

(72) Erfinder : **Buerstinghaus, Rainer, Dr.**
**Weinbergstrasse 85**
**D-6940 Weinheim (DE)**
Erfinder : **Henkes, Erhard, Dr.**
**Dr.-Kurt-Schumacher-Strasse 1**
**D-6141 Einhausen (DE)**
Erfinder : **Kiehs, Karl, Dr.**
**Sudetenstrasse 22**
**D-6840 Lampertheim 1 (DE)**
Erfinder : **Adolphi, Heinrich, Dr.**
**Kalmitweg 11**
**D-6703 Limburgerhof (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft Oximinophosphorsäurederivate, Verfahren zu ihrer Herstellung, Schädlingsbekämpfungsmittel, die diese Phosphorsäurederivate als Wirkstoffe enthalten, sowie ein Verfahren zur Bekämpfung von Schädlingen mit diesen Wirkstoffen.

Oximinophosphorsäurederivate sind aus der DE-AS-1 052 981, der DE-AS-1 238 902, der DE-OS-2 304 848 der DE-OS-2 952 738, der DE-OS-3 135 182, der US-A-2 816 128 und US-A-3 551 529 bekannt. Sie eignen sich zur Bekämpfung von Insekten und Spinnentieren. Ihre Wirkung ist jedoch speziell bei geringer Konzentration nicht immer ganz zufriedenstellend.

Es wurde gefungen, daß Oximinophosporsäurederivate der Formel I

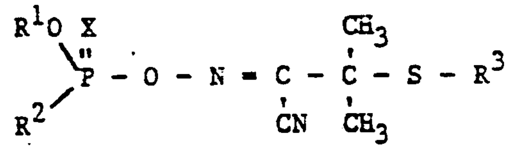 (I)

in der

$R^1$ eine unverzweigte oder verzweigte Alkylgruppe mit bis zu 4 Kohlenstoffatomen,

$R^2$ eine unverzweigte oder verzweigte Alkoxy- oder Alkylthiogruppe mit bis zu 4 Kohlenstoffatomen, eine unverzweigte oder verzweigte Alkylgruppe mit bis zu 3 Kohlenstoffatomen, Phenyl, die Aminogruppe oder einen unverzweigten oder verzweigten Alkylamino- oder Dialkylaminorest mit jeweils bis zu 4 Kohlenstoffatomen in einer Alkylgruppe, oder Isobutyl für den Fall, daß $R^1$ Ethyl, $R^3$ Methyl und X Schwefel ist,

$R^3$ eine unverzweigte oder verzweigte Alkylgruppe mit bis zu 4 Kohlenstoffatomen,

X Sauerstoff oder Schwefel bedeuten

insektizid, akarizid und nematizid sehr gut wirksam und bekannten Wirkstoffen ähnlicher Struktur bzw. gleicher Wirkungsrichtung überlegen sind.

Die Oximinophosphorsäurederivate der Formel I können durch Umsetzung entsprechender α-Oximinonitrile mit entsprechenden (Thiono) (Thiol) Phosphor (Phosphon) säureester(amid) halogeniden erhalten werden :

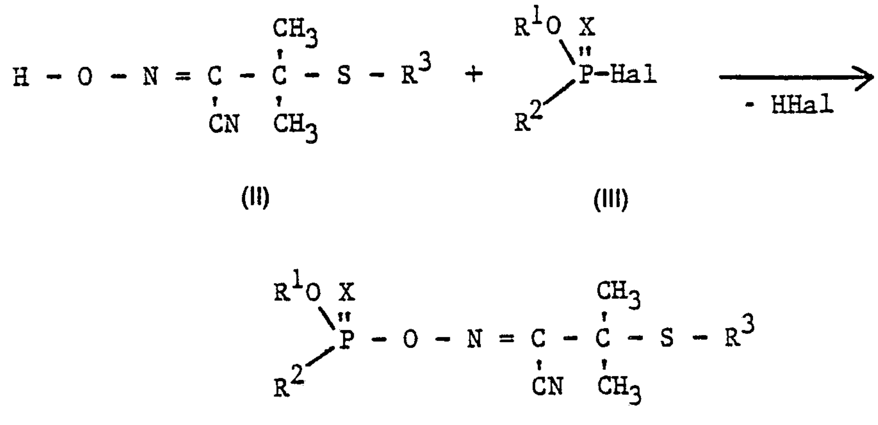


(II) (III)

(I)

Hal(ogen) bedeutet aus wirtschaftlichen Gründen vorzugsweise ein Chloratom.

Die Umsetzung wird zweckmäßigerweise in einem Lösungs- oder Verdünnungsmittel ausgeführt. Hierzu sind beispielsweise geeignet : aliphatische und aromatische, gegebenenfalls chlorierte Kohlenwasserstoffe, wie Petrolether, Benzol, Toluol, Xylol, Benzin, Dichlormethan, Chloroform, Tetrachlormethan, 1,2-Dichlorethan, Chlorbenzol, wie Diethyl- und Di-n-butylether, Methyl-tert.-butylether, Tetrahydrofuran, Dioxan ; Ketone, beispielsweise Aceton, Methylethylketon, Methylisopropylketon ; ferner Nitrile, wie Acetonitril und Propionitril. Auch Gemische dieser Stoffe können als Lösungs- oder Verdünnungsmittel verwendet werden.

Als Säurebindemittel (Säureacceptoren) eignen sich die bei der Phosphorylierung von Hydroxyverbindungen üblichen basischen Mittel. Besonders geeignet sind Alkalimetallcarbonate oder -alkoholate, wie Natrium- und Kaliumcarbonat, -methylat und -ethylat, ferner aliphatische, aromatische und heterocyclische Amine, z. B. Triethylamin, Dimethylamin, Piperidin, Dimethylanilin, Dimethylbenzylamin und Pyridin. In einigen Fällen ist die Verwendung von Alkyllithiumverbindungen, z. B. n-Butyllithium oder

Alkalimetallhydriden, z. B. Natriumhydrid vorteilhaft.

Anstelle des Zusatzes eines Säureacceptors kann man auch vor der Umsetzung die Salze der α-Oximinonitrile (II), etwa die Alkalimetall-, Erdalkalimetall- oder Ammoniumsalze herstellen und diese umsetzen.

Üblicherweise setzt man die Ausgangsstoffe in stöchiometrischem Verhältnis ein. Ein Überschuß des einen oder anderen kann in Einzelfällen aber durchaus vorteilhaft sein.

Die Umsetzung verläuft gewöhnlich oberhalb von Raumtemperatur mit ausreichender Geschwindigkeit. 120 °C müssen i. a. nicht überschritten werden. Da die Reaktion in einigen Fällen unter Wärmeentwicklung verläuft, kann es von Vorteil sein, eine Kühlmöglichkeit vorzusehen.

Aus dem Reaktionsgemisch wird der erfindungsgemäße Wirkstoff in üblicher Weise gewonnen, z. B. durch Versetzen mit Wasser, Trennen der Phasen und Destillation und/oder Säulenchromatographie.

Die zur Herstellung von Verbindungen der Formel (I) als Ausgangsmaterialien verwendeten α-Oximinonitrile der Formel (II) sind neue Stoffe. Sie lassen sich z. B. durch Umsetzung von halogenierten α-Oximinonitrilen der Formel (IV), in der Hal beispielsweise für Chlor oder Brom steht, mit Alkylthiolen der Formel (V) gemäß folgender Reaktionsgleichung herstellen :

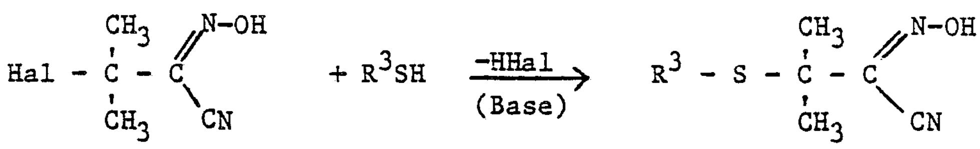


(IV) (V) (II)

Als Säurebindemittel (Säureacceptoren) eignen sich die bei Alkylthiolierungen von Halogenverbindungen üblichen basischen Mittel. Besonders geeignet sind Alkalimetallhydroxide oder -alkoholate, wie Natrium- und Kaliumhydroxid, -methylat und -ethylat, ferner aliphatische, aromatische und heterocyclische Amine. In einigen Fällen ist die Verwendung von Alkyllithiumverbindungen, z. B. n-Butyllithium oder Alkalimetallhydriden, z. B. Natriumhydrid, vorteilhaft.

Anstelle des Zusatzes eines Säureacceptors kann man auch vor der Umsetzung die Salze der Alkylthiole, etwa die Alkalimetallsalze herstellen und diese umsetzen.

α-Oximinonitrile der Formel IV erhält man in bekannter Weise (Houben-Weyl, Methoden der organischen Chemie, Band IV/5a, S. 143ff, Stuttgart 1975) durch Halogenierung des aus der US-PS-4 302 402 bekannten Vorläufers VI nach

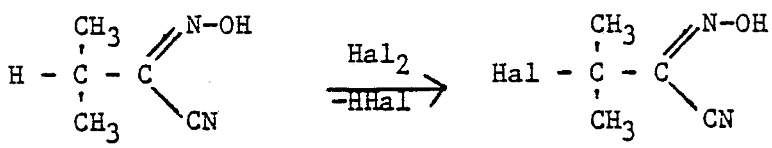


(VI) (IV)

Die zur Synthese der Verbindungen der Formel I außerdem benötigten (Thio) (Thiol) Phosphor(Phosphon) säureester(amid) halogenide III sind aus Houben-Weyl, Methoden der organischen Chemie, Band XII/2, S. 274 ff (Stuttgart 1964) bekannt und lassen sich auf den dort beschriebenen Synthesewegen herstellen.

Die neuen Verbindungen der Formel I fallen teilweise in Form farbloser oder schwach bräunlich gefärbter Öle an, die sich durch längeres Erwärmen unter vermindertem Druck auf mäßig erhöhte Temperatur (« Andestillieren ») von den letzten flüchtigen Anteilen befreien und auf diese Weise reinigen lassen. Sind die Verbindungen der Formel I kristallin, so kann ihre Reinigung durch Umkristallisation erfolgen.

Da die Verbindungen der Formel I meist als Gemische strukturisomerer syn- und anti-Formen auftreten, eignen sich deren Schmelz- bzw. Siedebereiche wenig zur Identifizierung, es sei denn, man hat die Strukturisomeren zuvor getrennt. Von den jeweils hergestellten Stoffen werden daher im folgenden H-NMR-Spektren, Ergebnisse der Elementaranalyse und IR-Spektren mit typischen Absorptionsmaxima aus dem sog. « fingerprint » Bereich zwischen 1 500 $cm^{-1}$ und 900 $cm^{-1}$ angegeben.

Beispiel 1

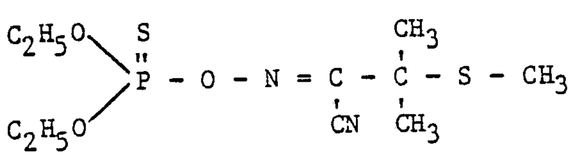

6,0 g 2-Hydroximino-3-methylthio-3-methylbutyronitril und 5,2 g gepulvertes Kaliumcarbonat werden in 60 ml Acetonitril gelöst bzw. suspendiert und unter Rühren tropfenweise mit 7,52 g Thiophosphorsäure-O,O-diethylesterchlorid versetzt. Die Mischung wird 24 Stunden bei 60 °C gerührt, dann wird von unlöslichen Bestandteilen abgesaugt und das Filtrat im Vakuum eingeengt. Der Rückstand wird in Ether aufgenommen, einmal mit 5 %iger Natronlaugen sowie dreimal mit Wasser gewaschen und vom Lösungsmittel befreit. Nach dem Andestillieren bei 75 °C und 0,01 mbar verbleiben 11,45 g O-(O,O-Diethylthiophosphoryl)--oximino-3-methyl-thio-3-methylbutyronitril aus nahezu farbloses, viskoses Öl, Ausbeute 97 % der rechnerisch möglichen.

$C_{10}H_{19}N_2O_3PS_2$(310)
ber. : C 38,7 H 6,2 N 9,0
gef. : C 39,0 H 6,4 N 9,2

200-MHz-H-NMR-Spektrum in $CDCl_3$ (δ Werte in ppm) : 1,35 (t, 6H) ; 1,65 (s, 6H) ; 2,05 (s, 3H) ; 4,20-4,45 (m, 4H).

Infrarotabsorptionen ($cm^{-1}$) : 1108, 1022, 975, 928, 900, 854, 824, 800, 764.

Die in der nachstehenden Tabelle aufgeführten Verbindungen wurden ebenfalls auf dem im Beispiel 1 beschriebenen Weg erhalten, soweit mindestens eine physikalische Angabe zu ihrer Identifizierungt vorliegt ; andere Verbindungen, die der Formel (I) entsprechen, können auf die gleiche Weise unter entsprechender Abwandlung der Vorschriften nach der jeweils benötigten Menge und (wegen der besten Reaktionsbedingungen) gegebenenfalls nach einem Vorversuch erhalten werden.

Tabelle

| Bsp. Nr. | $R^1$ | $R^2$ | $R^3$ | X | IR-Absorption (Maximum bei $cm^{-1}$) |
|---|---|---|---|---|---|
| 2 | $CH_3$ | $CH_3O$ | $CH_3$ | S | 1443, 1181, 1109, 1037, 927, 901, 862, 828, 766 |
| 3 | $CH_3$ | $CH_3O$ | $CH_3$ | O | |
| 4 | $C_2H_5$ | $C_2H_5O$ | $CH_3$ | O | 1296, 1032, 930 |
| 5 | $C_2H_5$ | n-$C_3H_7S$ | $CH_3$ | S | 1021, 962, 923, 888, 844, 789, 760 |
| 6 | $C_2H_5$ | n-$C_3H_7S$ | $CH_3$ | O | |
| 7 | $C_2H_5$ | sec.-$C_4H_9S$ | $CH_3$ | S | |
| 8 | $C_2H_5$ | sec.-$C_4H_9S$ | $CH_3$ | O | 1440, 1380, 1369, 1263, 1133, 1102, 1020, 919, 895 |
| 9 | $C_2H_5$ | i-$C_3H_7NH$ | $CH_3$ | O | 1254. 1140, 1047, 939, 907, 771 |
| 10 | $C_2H_5$ | $NH_2$ | $CH_3$ | O | |
| 11 | $C_2H_5$ | $CH_3$ | $CH_3$ | S | 1300, 1036, 968, 936, 910, 886, 795, 756 |
| 12 | $C_2H_5$ | $C_2H_5$ | $CH_3$ | S | 1045, 1023, 962, 928, 887, 841, 809, 798 |
| 13 | $CH_3$ | $C_2H_5$ | $CH_3$ | S | 1458, 1053, 886, 814 |
| 14 | $C_2H_5$ | $C_6H_5$ | $CH_3$ | S | 1439, 1123, 1034, 1026, 886, 749 |
| 15 | $C_2H_5$ | i-$C_4H_9$ | $CH_3$ | S | |
| 16 | $C_2H_5$ | $C_2H_5O$ | $C_2H_5$ | S | 1108, 1022, 976, 927, 901, 854, 824, 799, 765 |
| 17 | $C_2H_5$ | $C_2H_5O$ | $C_2H_5$ | O | 1292, 1166, 1108, 1033, 987, 931, 906, 774 |
| 18 | $C_2H_5$ | $C_2H_5$ | $C_2H_5$ | S | 1045, 1023, 963, 927, 887, 841, 809, 798, 767 |

Tabelle (Fortsetzung)

| Bsp. Nr. | $R^1$ | $R^2$ | $R^3$ | X | IR-Absorption (Maximum bei $cm^{-1}$) |
|---|---|---|---|---|---|
| 19 | $C_2H_5$ | $CH_3$ | $C_2H_5$ | S | 1108, 1037, 969, 936, 910, 887, 795, 758 |
| 20 | $CH_3$ | $CH_3O$ | $C_2H_5$ | S | 1181, 1109, 1039, 929, 902, 863, 831, 767 |
| 21 | $CH_3$ | $CH_3O$ | $C_2H_5$ | O | |
| 22 | $C_2H_5$ | $i-C_3H_7S$ | $C_2H_5$ | O | |
| 23 | $C_2H_5$ | $n-C_3H_7S$ | $C_2H_5$ | O | |
| 24 | $C_2H_5$ | $C_2H_5O$ | $i-C_3H_7$ | S | 1107, 1051, 1024, 976, 928, 900, 855, 824 |
| 25 | $C_2H_5$ | $C_2H_5O$ | $t-C_4H_9$ | S | 1163, 1105, 1024, 976, 927, 897, 855, 825 |
| 26 | $C_2H_5$ | $sec.-C_4H_9S$ | $C_2H_5$ | S | |
| 27 | $C_2H_5$ | $n-C_3H_7S$ | $C_2H_5$ | S | |
| 28 | $C_2H_5$ | $n-C_3H_7S$ | $i-C_3H_7$ | S | |
| 29 | $C_2H_5$ | $n-C_3H_7S$ | $t-C_4H_9$ | S | |

Vorprodukte

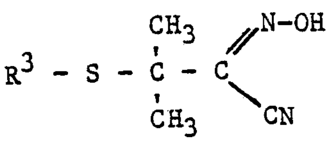

$R^3 = CH_3$

40,5 g 2-Hydroximino-3-methylbutyronitril werden in 750 ml Methylenchlorid gelöst und unter Lichteinwirkung (HPK-125-W-Lampe) innerhalb von 23 Stunden mit 57,9 g Brom, gelöst in 70 ml Methylenchlorid, versetzt.

Die so erhaltene Mischung wurde tropfenweise zu einer Lösung von Natriummethylmercaptid (hergestellt durch Eingasen von 24 g Methylmercaptan in 30 %iges Natriummethylat) gegeben. Man ließ 12 Stunden bei Raumtemperatur rühren, zog das Lösungsmitttel in Vakuum ab, nahm den Rückstand in Ether auf, wusch dreimal mit Wasser und trocknete über Natriumsulfat. Nach Filtration über Kieselgel wurde eingeengt und das verbleibende Öl unter vermindertem Druck (0,01 mbar) destilliert, wobei 10,2 g des gewünschten 2-Hydroximino-3-methylthio-3-methyl-butyronitrils bei einer Temperatur von 86 °C als farblose Flüssigkeit übergingen, welche beim Abkühlen durchkristallisierte. Schmelzintervall : 61-64 °C.

Infrarotabsorptionen ($cm^{-1}$) ; 1423, 1387, 1104, 1016, 982, 680, 640.

60 MHz-NMR-Spektrum in $CDCl_3$ (δ-Werte in ppm) : 1,60 (s, 6H) : 2,0 (s, 3H) : 9,35 (breites s, 1H).

Die in der nachstehenden Tabelle aufgeführten Vorprodukte (II) wurden ebenfalls auf dem zuvor beschriebenen Weg erhalten ; andere Vorprodukte, die der Formel II entsprechen, können auf die gleiche Weise unter entsprechender Abwandlung der Vorschriften nach der jeweils benötigten Menge und — wegen der besten Reaktionsbedingungen — gegebenenfalls nach einem Vorversuch erhalten werden.

| $R^3$ | IR-Absorption (Maximum bei $cm^{-1}$) |
|---|---|
| $C_2H_5$ | 1447, 1425, 1387, 1138, 1103, 983 |
| $i-C_3H_7$ | 1455, 1444, 1424, 1387, 1368, 1138, 1005, 989 |
| $n-C_3H_7$ | |
| $t-C_4H_9$ | 1425, 1366, 1156, 1135, 1006, 987, 685 |

Die Phosphorsäureester der Formel I sind geeignet, Schädlinge aus der Klasse der Insekten, Spinnentiere und Nematoden wirksam zu bekämpfen. Sie können im Pflanzenschutz sowie auf dem Hygiene-, Vorratsschutz- und Veterinärsektor als Schädlingsbekämpfungsmittel eingesetzt werden.

Die Formulierungen enthalten im allgemeinen zwischen 0,1 und 95 Gew.% Wirkstoff, vorzugsweise zwischen 0,5 und 90 Gew.%.

Die Wirkstoffkonzentrationen in den anwendungsfertigen Zubereitungen können in größeren Bereichen variiert werden.

Im allgemeinen liegen sie zwischen 0,000 01 und 10 %, vorzugsweise zwischen 0,001 und 0,1 %.

Die Wirkstoffe können auch mit gutem Erfolg im Ultra-Low-Volume-Verfahren (ULV) verwendet werden, wobei es möglich ist, Formulierungen mit mehr als 95 Gew.% Wirkstoff oder sogar den Wirkstoff ohne Zusätze auszubringen.

Die Aufwandmenge an Wirkstoff beträgt unter Freilandbedingungen 0,02 bis 10, vorzugsweise 0,1 bis 2,0 kg/ha.

Zu den Wirkstoffen können Öle verschiedenen Typs, Herbizide, Fungizide, andere Schädlingsbekämpfungsmittel, Bakterizide, gegebenenfalls auch erst unmittelbar vor der Anwendung (Tankmix), zugesetzt werden. Diese Mittel können zu den erfindungsgemäßen Mitteln im Gewichtsverhältnis 1 : 10 bis 10 : 1 zugemischt werden.

Kontaktwirkung auf Stubenfliegen (Musca domestica), Applikationstest

4-Tage alte Imagines erhalten in leichter $CO_2$-Narkose 1 µl der acetonischen Wirkstofflösung auf das ventrale Abdomen appliziert. Hierzu wird eine Mikrometerspritze verwendet.

Je 20 Versuchstiere mit gleicher Behandlung bringt man in einen Cellophanbeutel (ca. 500 ml).

Nach 4 Stunden zählt man die Tiere in Rückenlage aus und ermittelt graphisch die LD 50.

Ergebnis

| | | |
|---|---|---|
| Wirkstoffbeispiel 1 | LD 50 | 0,08 µg/Fliege |
| Malathion | LD 50 | 0,5 µg/Fliege |

Tribolium castaneum ; Malathion-resistent

Kontaktwirkung auf behandeltem Rundfilter ∅ 7 cm
Mortalität nach 24 Stunden

| | | |
|---|---|---|
| Wirkstoffbeispiel 1 | 0,1 mg | 100 % Mort. |
| Malathion | 2,0 mg | unwirksam |

Prodenia litura, Zuchtversuch

mit Raupen ab L 3 auf behandeltem Agar-Nährboden

Wirkstoffbeispiel 1 1 ppm 100 % Mort.

Für die folgenden Beispiele wurden als Vergleichsmittel Beispiele aus der DE-OS-3 135 182 eingesetzt.

I. 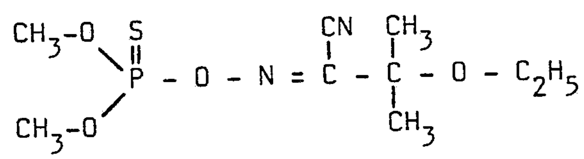

und

II. 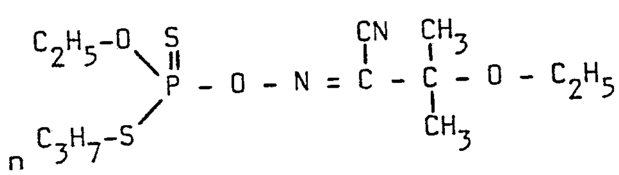

1. Dauerkontakt auf Stubenfliegen (Musca domestica)

Petrischalen mit 10 cm Durchmesser werden innen mit der azetonischen Lösung der Wirkstoffe behandelt.

Nach Verdunsten des Lösungsmittels besetzt man die Schalen mit 20 4-Tage alten Stubenfliegen.

Die Mortalität wird nach 4 Stunden ermittelt.

Ergebnis

| | mg | % Mortalität |
|---|---|---|
| Beispiel 1 | 0,01 | 100 |
| 12 | 0,01 | 100 |
| 13 | 0,01 | 100 |
| 16 | 0,01 | 100 |
| 17 | 0,01 | 100 |
| 18 | 0,01 | 100 |
| 20 | 0,01 | 100 |
| 25 | 0,004 | 80 |
| Vergleich I | 0,02 | 100 |
| | 0,01 | <60 |
| Vergleich II | 0,02 | 100 |
| | 0,01 | <60 |

2. Kontaktwirkung auf Schaben (Blatta orientalis)

Der Boden eines l 1-Weckglases wird mit der acetonischen Lösung des Wirkstoffes behandelt. Nach Verdunsten des Lösungsmittels setzt man je Glas 5 adulte Schaben. Die Mortalitätsrate wird nach 48 Stunden bestimmt.

Ergebnis

| | mg | % Mortalität |
|---|---|---|
| Beispiel 1 | 0,02 | 100 |
| 16 | 0,04 | 100 |
| Vergleich I | 0,1 | 100 |
| | 0,04 | <60 |
| Vergleich II | 0,1 | 100 |
| | 0,04 | <60 |

3. Kontaktwirkung auf Moskito-Larven (Aedes aegypti)

200 ml Leitungswasser werden mit der Wirkstoffaufbereitung versetzt und darauf mit 30-40 Moskito-Larven im 4. Larvenstadium besetzt.
Die Versuchstemperatur beträgt 20 °C. Nach 24 Stunden wird die Wirkung ermittelt.

Ergebnis

| | | % Mortalität |
|---|---|---|
| Beispiel 1 | 0,01 mg | 100 |
| 2 | 0,2 mg | 100 |
| 16 | 0,04 mg | 100 |
| 17 | 0,02 mg | 100 |
| 18 | 0,1 mg | 100 |
| 20 | 0,1 mg | 100 |
| 24 | 0,04 mg | 100 |
| 25 | 0,04 mg | 100 |
| Vergleich I | 1 ppm | <60 |
| Vergleich II | 1 ppm | <60 |

4. Zuchtversuch mit Stubenfliegen-Larven (Musca domestica)

Je 4,5 ml Magermilch füllt man in 50 ml Penicillingläser und versetzt sie darauf mit 0,5 ml der wäßrigen Wirkstoffaufbereitung. Nach kurzem Mischen fügt man ein Wattebällchen (Firma Hartmann, Maintal) dazu und belegt dieses mit ca. 50 Ei-Larven der Stubenfliege.

Die Gläser lagert man abgedeckt bei Raumtemperatur und beurteilt die Entwicklung nach 7 Tagen.

Ergebnis

| | | ppm | % Mortalität |
|---|---|---|---|
| Beispiel | 1 | 1,0 | 100 |
| | 2 | 0,2 | 100 |
| | 12 | 0,1 | 100 |
| Vergleich | I | 2,5 | 100 |
| | | 1,0 | <60 |
| Vergleich | II | 2,5 | 100 |
| | | 1,0 | <60 |

5. Kontaktwirkung auf Baumwollwanze (Dydercus intermedius)

Petrischalen mit 10 cm Durchmesser werden mit 1 ml azetonischen Wirkstofflösung ausgekleidet.

Nach Verdunsten des Lösungsmittels besetzt man die Schalen mit je 20 Larven des vorletzten Stadiums und registriert die Wirkuntg nach 24 Stunden.

Ergebnis

| | | mg | % Mortalität |
|---|---|---|---|
| Beispiel | 1 | 0,002 | 100 |
| | 2 | 0,004 | 100 |
| | 11 | 0,002 | 80 |
| | 12 | 0,002 | 80 |
| | 16 | 0,002 | 80 |
| | 17 | 0,002 | 100 |
| | 18 | 0,004 | 100 |
| | 19 | 0,01 | 100 |
| | 24 | 0,004 | 100 |
| Vergleich | I | 0,02 | 100 |
| | | 0,01 | <80 |
| Vergleich | II | 0,05 | 100 |
| | | 0,02 | <80 |

6. Kontaktwirkung auf Zecken (Ornithodorus moubata)

Die Prüfung erfolgt an jungen Zecken, die erst einmal Blut aufgenommen haben. Je 5 Tiere werden in einen TEEFIX-Beutel 5 Sekunden in die wäßrige Wirkstoffaufbereitung getaucht. Der Beutel wird frei aufgehängt. Nach 48 Stunden ermittelt man die Mortalitätsrate.

Die Versuchstemperatur beträgt 25-26 °C.

Ergebnis

| | ppm | % Mortalität |
|---|---|---|
| Beispiel 1 | 4 | 100 |
| 2 | 100 | 100 |
| 5 | 40 | 100 |
| 8 | 40 | 100 |
| 9 | 10 | 100 |
| 12 | 20 | 100 |
| 16 | 1 | 100 |
| Vergleich I | 400 | 100 |
| | 200 | < 80 |
| Vergleich II | 1 000 | 100 |
| | 400 | <80 |

**Patentansprüche**

1. Oximinophosphorsäurederivat der Formel I

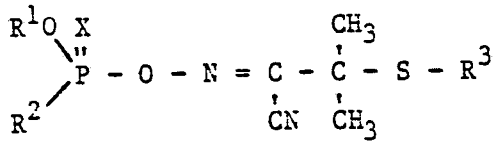

(I)

in der

$R^1$ eine unverzweigte oder verzeigte Alkylgruppe mit bis zu 4 Kohlenstoffatomen,

$R^2$ eine unverzweigte oder verzweigte Alkoxy- oder Alkylthiogruppe mit bis zu 4 Kohlenstoffatomen, eine unverzweigte oder verzweigte zweigte Alkylgruppe mit bis zu 3 Kohlenstoffatomen, Phenyl, die Aminogruppe oder einen unverzweigten oder verzweigten Alkylamino- oder Dialkylaminorest mit jeweils bis zu 4 Kohlenstoffatomen in einer Alkylgruppe, oder Isobutyl für den Fall, daß $R^1$ Ethyl, $R^3$ Methyl und X Schwefel ist,

$R^3$ eine unverzweigte oder verzweigte Alkylgruppe mit bis zu 4 Kohlenstoffatomen,

X Sauerstoff oder Schwefel bedeuten.

2. Verfahren zur Herstellung von Oximinophosphorsäurederivaten der Formel I gemäß Anspruch 1, dadurch gekennzeichnet, daß man

a) ein entsprechendes α-Oximinonitril (II)

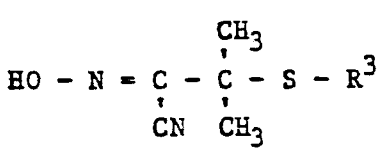

(II)

in Gegenwart eines Säureacceptors oder

b) Alkalimetall-, Erdalkalimetall- oder gegebenenfalls substituierte Ammoniumsalze dieser α-Oximinonitrile

mit einem entsprechenden (Thio) (Thiol) Phosphor(Phosphon)-säureester(amid)-halogenid (III)

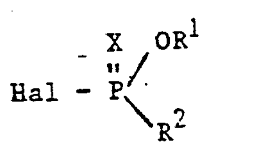

(III)

gegebenenfalls in Gegenwart eines Lösungs- oder Verdünnungsmittels bei Temperaturen zwischen 0 und 120 °C umsetzt.

3. Schädlingsbekämpfungsmittel, enthaltend ein Oximinophosphorsäurederivat gemäß Anspruch 1.

4. Schädlingsbekämpfungsmittel, enthaltend einen festen oder flüssigen Trägerstoff und mindestens ein Oximinophosphorsäurederivat der Formel I gemäß Anspruch 1.

5. Verwendung von Oximinophosphorsäurederivaten der Formel I gemäß Anspruch 1 zur Bekämpfung von Schädlingen.

6. Verfahren zur Bekämpfung von Schädlingen, dadurch gekennzeichnet, daß man eine wirksame Menge des Oximinophosphorsäurederivats gemäß Anspruch 1 auf Schädlinge bzw. deren Lebensraum einwirken läßt.

**Claims**

1. An oximinophosphoric acid derivative of the formula I

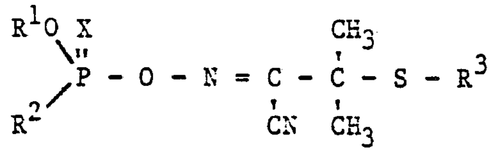

(I)

where

$R^1$ is straight-chain or branched alkyl of not more than 4 carbon atoms,

$R^2$ is straight-chain or branched alkoxy or alkylthio, each of not more than 4 carbon atoms, straight-chain or branched alkyl of not more than 3 carbon atoms, phenyl, amino, or straight-chain or branched alkylamino or dialkylamino, where alkyl in each case is of not more than 4 carbon atoms, or isobutyl in the case that $R^1$ is ethyl, $R^3$ is methyl and X is sulfur,

$R^3$ is straight-chain or branched alkyl of not more than 4 carbon atoms and

X is oxygen of sulfur.

2. A process for the preparation of an oximinophosphoric acid derivative of the formula I as claimed in claim 1, wherein

a) an appropriate α-oximinonitrile (II)

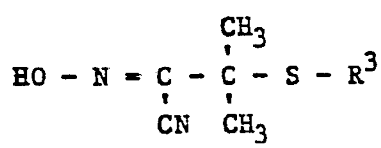

(II)

in the presence of an acid acceptor, or

b) an alkali metal salt, alkaline earth metal salt or unsubstituted or substituted ammonium salt of this α-oximinonitrile,

is reacted with an appropriate (thio) (thiol) phosphoric (phosphonic) ester (amide) halide (III)

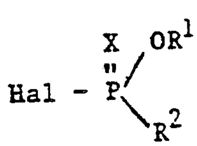

(III)

in the presence or absence of a solvent or diluent, at from 0 to 120 °C.

3. A pesticide containing an oximinophosphoric acid derivative as claimed in claim 1.

4. A pesticide containing a solid or liquid carrier and one or more oximinophosphoric acid derivatives of the formula I as claimed in claim 1.

5. Use of an oximinophosphoric acid derivative of the formula I as claimed in claim 1 for controlling pests.

6. A process for controlling pests, wherein an effective amount of an oximinophosphoric acid derivative as claimed in claim 1 is allowed to act on pests or on their habitat.

**Revendications**

1. Dérivés d'acide oximino-phosphorique de la formule I

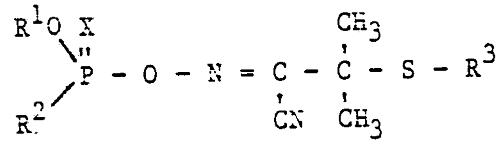 (I)

dans laquelle

$R^1$ représente un radical alkyle ramifié ou non ramifié avec jusqu'à quatre atomes de carbone,

$R^2$ représente un radical alcoxy ou alkyl-thio ramifié ou non ramifié avec jusqu'à quatre atomes de carbone, un radical alkyle ramifié ou non ramifié avec jusqu'à trois atomes de carbone, un groupe phényle, un groupe amino ou un groupe alkyl-amino ou dialkyl-amino avec un ou des radicaux alkyle en $C_1$ à $C_4$, ou, lorsque $R^1$ = éthyle, $R^2$ = méthyle et X = S, un radical isobutyle,

$R^3$ représente un radical alkyle ramifié ou non ramifié avec jusqu'à quatre atomes de carbone et X désigne un atome d'oxygène ou de soufre.

2. Procédé de préparation de dérivés d'acide oximino-phosphorique de la formule I selon la revendication 1, caractérisé en ce que l'on fait réagir soit

a) un α-oximino-nitrile (II) approprié

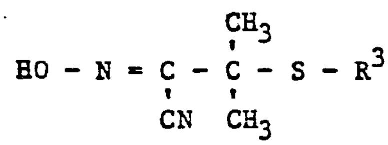 (II)

en présence d'un fixateur d'acide, soit

b) un sel de métal alcalin, de métal alcalino-terreux ou d'ammonium éventuellement substitué d'un tel α-oximino-nitrile

avec un halogénure d'un ester d'acide (amide) (thio) (thiol) phosphorique (phosphonique) (III) approprié

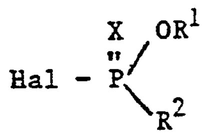 (III)

à des températures comprises entre 0 et 120 °C, éventuellement en présence d'un solvant ou d'un diluant.

3. Composition pesticide, contenant un dérivé d'acide oximino-phosphorique selon la revendication 1.

4. Composition pesticide, contenant au moins un dérivé d'acide oximino-phosphorique de la formule I selon la revendication 1 dans un véhicule solide ou liquide.

5. Utilisation de dérivés d'acide oximino-phosphorique de la formule I selon la revendication 1 pour la lutte contre des parasites.

6. Procédé de lutte contre des parasites, caractérisé en ce que l'on traite les parasites ou leur biotope avec une quantité efficace d'un dérivé d'acide oximino-phosphorique selon la revendication 1.